# EUROPEAN PATENT SPECIFICATION

(11) **EP 0 779 957 B1**
(45) Date of publication and mention of the grant of the patent: **04.12.2002**
(21) Application number: 95932342.9
(22) Date of filing: 30.08.1995
(51) Int. Cl.: F16L 17/02, F16L 37/084

(54) **PIPE JOINING CONSTRUCTION**
ROHRVERBINDUNGSSYSTEM
SYSTEME DE RACCORD DE CONDUITES

(30) Priority: 31.08.1994 JP 20616094
(43) Date of publication of application: 25.06.1997
(73) Proprietor: ITT AUTOMOTIVE, INC., Auburn Hills, MI 48326-2356 (US); SANOH INDUSTRIAL CO., LTD., Ibaraki 306 (JP)
(72) Inventor: KAISHIO, Mitsuo, Koga-shi, Ibaraki 306 (JP)
(74) Representative: Dreiss, Fuhlendorf, Steimle & Becker
(86) International application number: US9510964
(87) International publication number: WO96007045

(56) References cited:
- US-A- 2 131 509
- US-A- 3 955 834
- US-A- 4 603 890
- US-A- 5 261 709

## Description

The present invention relates to a pipe or conduit joining construction according to the preamble of Claim 1.

US Patent No. 5,261,709 discloses a metallic pipe or connector comprising a male end form with a tip end adapted for fitting a polymeric pipe into the metallic pipe, having a seal member (O-ring) mounted on the outer periphery of the male end form, inside an annular groove 100. It does not disclose a separate collar. US Patent No. 2,131,509 discloses a metallic pipe adapted for being assembled with another metallic pipe, comprising a seal member, a separate collar provided with external thread, engaged with an internally threaded coupling nut. US Patent 4,603,890 discloses a metallic pipe or connector comprising a male end form with a tip end adapted for coupling a polymeric pipe. The seal member is placed within an annular groove and the end part is provided with an external tapered surface. D3 does not show a collar.

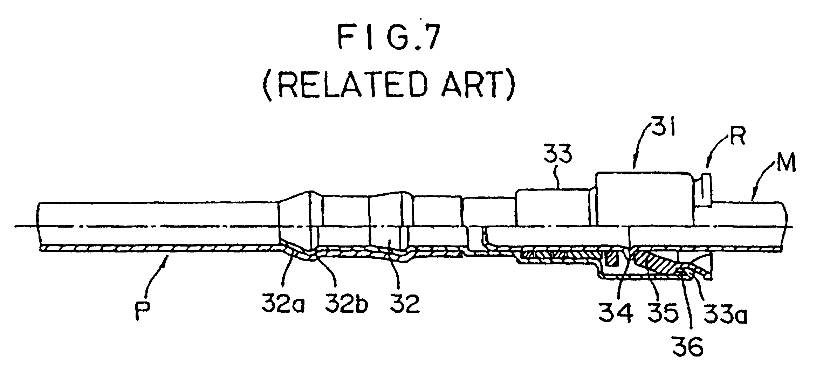

One example of a conventional pipe joining construction is shown in Fig. 7. In this case, a male fitting portion 32 of a metallic connector 31, except for a tip end portion, has an outside diameter slightly larger than the inside diameter of a resin pipe P, and has a tapered portion 32a and a slip-out preventive ridge 32b at the tip end. The male fitting portion 32 is pressed into the end portion of the resin pipe P by which a seal is provided by using a tightening force of the resin pipe P which is elastically deformed by the pressing.

On the other end of the connector 31, a metallic pipe M is inserted. By this insertion, a locking claw 35 of a retainer R is engaged with a bead 34 formed at the outer periphery of the metallic pipe M. On the other hand, the edge of the female portion 33 of the connector 31 sis folded back to the inside to provide a slip-out preventive piece 33a which engages a slip-out preventive piece receiving portion 36 on the retainer R. Thus, the resin pipe P and the metallic pipe M are joined to each other.

For the above-described pipe joining construction according to Fig. 7, airtightness is maintained only by the tightness of the resin pipe P. Therefore, when creep deformation of the resin pipe P occurs due to heat deterioration, the force for tightening the male fitting portion 32 decreases such that the airtightness cannot be maintained. Other factors which contribute to a lack of air tightness include variations in the size and tolerances of both pipes, the inner diameter (I.D.) surface finish of the resin pipe, the outer diameter (O.D.) surface finish of the metal pipe, the metal pipe weld seam, and the hardness of the resin pipe.

The present invention has been made to solve the above problems. Accordingly, it would be desirable to provide a pipe joining construction which maintains airtightness for a long period of time, easily ensures the dimensional accuracy and surface finish accuracy, improves cold temperature sealing, reduces permeation, improves sealing after exposure to heat, and can decrease costs.

The above mentioned object is solved by a pipe joining construction in accordance with claim 1.

The present invention is characterized in that, in a pipe joining construction for connecting a resin or polymeric pipe to a metallic pipe by fitting the resin pipe onto the outer periphery of a metallic male fitting portion or end form, a seal member is mounted at the outer periphery of the male fitting portion of a connector and a collar covers the outer periphery of the tip end of the male fitting portion. The collar has a tapered portion with a tapered outer periphery. Further, the collar is used as a holding member for holding the seal member in place.

In another embodiment, the present invention is further characterized in that a ring is mounted at the outer periphery of the male fitting portion adjacent to the seal member at a position opposite to the collar. The present invention is also characterized in that a bead is formed at the male fitting portion, the ring is mounted adjacent to the seal member between the bead and the seal member, and the seal member is positioned and held between the collar and the ring.

The present invention, in which a seal member is mounted at the outer periphery of a metallic male fitting portion, the outer periphery of the tip end of the male fitting portion is covered by a collar, the collar has a tapered portion with a tapered outer periphery, and the collar is used as a holding member for the seal member, can maintain airtightness for a long period of time, and can easily ensure the required dimensional accuracy and surface finish accuracy.

The present invention offers the following effects.

In the invention, the seal member is mounted at the outer periphery of the metallic male fitting portion, the outer periphery of tip end of the male fitting portion is covered by the collar, the collar has the tapered portion with a tapered outer periphery, and the collar is used as a holding member for holding the seal member. Therefore, the tapered portion can be used in place of the tip end shape of the conventional metallic tube. Also, since the collar is used as a holding member for holding the seal member, airtightness can be maintained for a long period of time, and the required dimensional accuracy and surface finish accuracy can be easily ensured despite variations in the size, surface finish and hardness of one or both pipes.

In another embodiment of this invention, the ring is mounted at the outer periphery of the male fitting portion adjacent to the seal member at a position opposite to the collar. Therefore, the working accuracy of the male fitting portion has no effect on the sealing properties. In another embodiment of the invention, the bead is formed at the male fitting portion, the ring is mounted adjacent to the seal member between the bead and the seal member, and the seal member is positioned and held between the collar and the ring. Therefore, the working accuracy of the male fitting portion including the bead has no effect on the sealing properties.
Fig. 1 is a partially cross sectioned, side elevational view showing a pipe joining construction in accordance with a first embodiment of the present invention;
Fig. 2 is a partially cross sectioned, side elevational view showing a modification of the first embodiment of the present invention;
Fig. 3 is a partially cross sectioned, side elevational view showing another modification of the first embodiment of the present invention;
Fig. 4 is a partially cross sectioned, side elevational view showing a pipe joining construction in accordance with a second embodiment of the present invention;
Fig. 5 is a partially cross sectioned, side elevational view showing a modification of the second embodiment of present invention;
Fig. 6 is a partially cross sectioned, side elevational view showing another modification of the second embodiment of the present invention; and
Fig. 7 is a partially cross sectioned, side elevational view showing a conventional pipe joining construction.

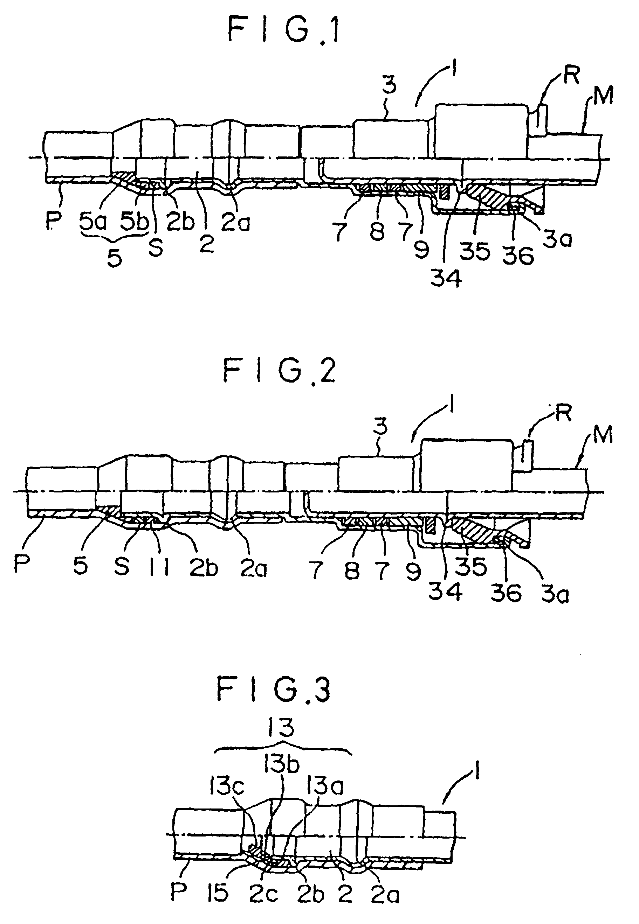

The embodiments of the present invention will be described in detail with reference to the drawings. In Fig. 1, a metallic pipe M, a resin or polymeric pipe P, and a retainer R are the same as the corresponding elements shown in Fig. 7. Therefore, the same reference numerals are applied to the same elements, and the detailed explanation of these elements is omitted.

In the pipe or conduit joining construction in accordance with a first embodiment, a seal member S is mounted at the outer periphery of a male fitting portion or end form 2 of a metallic connector 1 and a collar 5 is provided to cover the outer periphery of the tip end of the male fitting portion 2. In this pipe joining construction, the collar 5 is interposed between the outer periphery of the male fitting portion 2 and the inner periphery of the resin pipe P so that the collar 5 is used as a holding member for holding the seal member S.

The connector 1 integrally has the male fitting portion 2 fabricated into a spool and a female portion 3 having a diameter larger than that of the male fitting portion 2. A slip-out preventive ridge 2a and a bead 2b are formed on the male fitting portion 2. The annular seal member S is mounted at the outer periphery adjacent to the bead 2b, and the collar 5 is mounted on the tip end side adjacent to the seal member S to cover the outer periphery of the male fitting portion 2. The connector 1 does not have a tapered portion at the male fitting portion 2.

The connector 1 is provided with two O-rings 7, 7 disposed along the inner periphery of the female portion 3, a spacer 8 interposed between the O-rings 7, 7, a top hat 9 adjoining one O-ring 7, and a retainer R. The edge of the female portion 3 is folded back to the inside to form a slip-out preventive piece 3a.

The seal member S, being an O-ring made of NBR (nitrilebutadiene rubber), fluorine or silicon synthetic rubber, or the like, is mounted close to the bead 2b of the male fitting portion 2 and held in place by the collar 5 and the bead 2b.

The collar 5 made of synthetic resin, such as polyamide, polypropylene, and polyethylene, has an integral tapered portion 5a and a ring portion 5b. The ring portion 5b is fitted onto the outer periphery of the tip end of the male fitting portion 2 and a part of the tapered portion 5a protrudes from the tip end of the male fitting portion 2. The outer periphery of the tapered portion 5a is formed in such a manner as to be substantially the same as the tapered portion 32a of the conventional male fitting portion 32 shown in Fig. 7. The collar 5 not only covers the outer periphery of the tip end of the male fitting portion 2; but also is used as a holding member for holding the seal member S in place. An internal shoulder in the collar 5 abuts the tip end of the male fitting portion 2, as shown in Figs. 1 and 2.

To join the pipes, the male fitting portion 2 having the seal member S and the collar 5 at the outer periphery of the tip end thereof is inserted into one end of a resin pipe P, and the tip end of a metallic pipe M is inserted into the female portion 3 of the connector 1. During the insertion of the metallic pipe M, a locking claw 35 of the retainer R is pressed and expanded within the range of elastic deformation until a bead 34 on the metallic pipe M reaches a position beyond the tip end of the locking claw 35. Thereupon, the locking claw 35 engages the bead 34 and a slip-out preventive piece receiving portion 36 abuts against the slip-out preventive piece 33a to prevent slipping out of the metallic pipe M from the resin pipe P. Thus, the resin pipe P and the metallic pipe M are joined to each other via the connector 1.

In Fig. 2, the same reference numerals are applied to the same elements shown in Fig. 1. In this modification, a ring 11 is disposed adjacent to the seal member S between the bead 2b and the seal member S. In this case, since the seal member S is positioned and held between the collar 5 and the ring 11, the working accuracy of the male fitting portion 2 including the bead 2b has no effect on the sealing properties of the pipe joint.

Further, as shown in another modification in Fig. 3, a tapered portion 2c at the tip end of the male fitting portion 2 may be covered by a cylindrical seal member 13 and a conical collar 15 may be fitted onto the outer periphery of the cylindrical seal member 13. The seal member 13 may be a cylindrical member, or it may be a member integrally formed by a portion 13a corresponding to an O-ring, a tapered portion 13b, and a tip end portion 13c protruding beyond the tapered portion 2c of the male fitting portion 2.

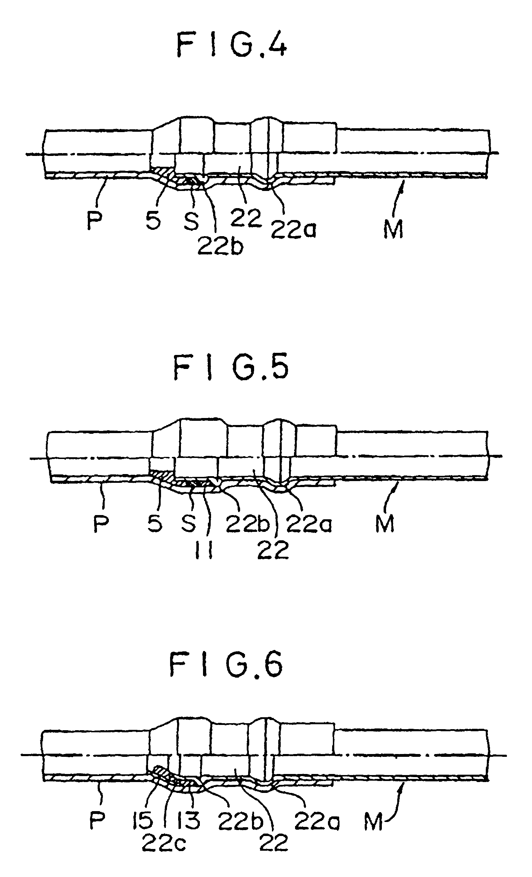

Fig. 4 to 6 are partially cross sectioned, side elevational views showing pipe joining constructions in accordance with a second embodiment of the present invention. In these pipe joining constructions, the connector 1 is omitted. A male fitting portion or end form 22 is formed at the tip end of the metallic pipe M, and the resin pipe P is directly fitted on the outer periphery of the male fitting portion 22 to join the resin or polymeric pipe P to the metallic pipe M.

The male fitting portion 22 has a slip-out preventive ridge 22a and a bead 22b. The male fitting portion 22 shown in Fig. 6 is formed with a tapered portion 22c. Figs. 4, 5 and 6 correspond to Figs. 1, 2 and 3, respectively. Therefore, the same reference numerals are applied to the same elements, and the explanation of the elements is omitted.

According to the second embodiment, since the working is easy, long pipes subjected to surface treatment, for example, automotive fuel pipes, can be joined, and the sealing properties can be maintained for a long period of time.

The present invention is not limited to the above embodiments, and can be modified variously. For example, a metal can be used in place of synthetic resin to form the collar, or the slip-out preventive ridge can be omitted in the case of low pressure.

## Claims

1. A pipe joining construction for fitting a polymeric pipe (P) onto the outer periphery of a metallic male end form (2) of a metallic pipe (M) comprising:
a metallic male end form (2) of a metallic pipe (M) and
a seal member (S, 13) mounted on the outer periphery of the male end form (2),
**characterized in that** the pipe joining construction further comprises:
a separate collar (5, 15) mounted on the outer periphery of the tip end of the male end form, the collar (5, 15) having a tapered portion (5a) with a tapering outer periphery, the collar (5, 15) acting as a holding member for the seal member (S, 13).

2. The pipe joining construction according to claim 1, wherein the separate collar (5, 15) is formed of a synthetic resin.

3. The pipe joining construction according to one of the preceding claims, wherein a ring (11) is mounted at the outer periphery of the male end form (2) adjacent to the seal member (S, 13) at a position opposite to the collar (5, 15).

4. The pipe joining construction according to claim 3, wherein:
a bead (2b) is formed on the male end form (2);
the ring (11) is mounted adjacent to the seal member (S, 13) between the bead (2b) and the seal member (S, 13); and
the seal member (S, 13) is positioned and held between the collar (5, 15) and the ring (11).

5. The pipe joining construction according to one of the preceding claims wherein:
a bead (2b) is formed on the male end form (2); and
the seal member (S, 13) is positioned adjacent the bead (2b).

6. The pipe joining construction according to one of the preceding claims wherein:
the collar (5) has an internal shoulder (5b) abutting a tip end of the male end form (2).

7. The pipe joining construction according to one of the preceding claims wherein:
the tip end of the male end form (2) has a tapered end portion (2c);
the seal member (S, 13) is mounted over the tapered end portion (2c) of the male end form (2); and
the collar (5, 15) covers an outer periphery of the tapered end portion of the seal member (S).

8. The pipe joining construction according to one of the preceding claims wherein:
the seal member (S, 13) has an O-ring shaped end (13a), an intermediate tapered portion (13b), and a tip end portion (13c).

9. The pipe joining construction according to one of the preceding claims wherein:
the tip end portion (13c) of the seal member (S, 13) protrudes beyond the tapered end portion (2c) of the male end form (2).

10. The pipe joining construction according to one of the preceding claims wherein:
a bead (2b) is formed on the male end form (2);
a ring (11) is mounted adjacent to the seal member (S, 13) between the bead (2b) and the seal member (S, 13); and
the seal member (S, 13) is positioned and held between the collar (5, 15) and the ring (11).

11. The pipe joining construction according to one of the preceding claims wherein:
a bead (2b) is formed on the male end form (2); and
the seal member (S, 13) is positioned adjacent the bead (2b).

12. The pipe joining construction according to one of the preceding claims wherein:
the male end form (2) is formed on a pipe (M) insertable into the polymeric pipe (P).

13. The pipe joining construction according to one of the preceding claims further comprising:
the metallic pipe (M) having the male end form (2) formed at a tip end of the metallic pipe, and an opposed female portion (3), the male end form (2) insertable into the polymeric pipe (P) and the female portion (3) receiving the metallic pipe (M).

14. The pipe joining construction according to one of the preceding claims, wherein:
a bead (2b) is formed on the male end form (2) of the metallic pipe (M);
a ring (11) is mounted on the male end form (2) adjacent to the seal member (S, 13) between the bead (2b) and the seal member (S, 13); and
the seal member (S, 13) is positioned and held between the collar (5, 15) and the ring (11).

15. The pipe joining construction according to one of the preceding claims wherein:
a bead (2b) is formed on the male end form (2); and the seal member (S, 13) is positioned adjacent the bead (2b).

## Patentansprüche

1. Rohrverbindungskonstruktion zum Befestigen eines Polymerrohrs (P) auf dem äußeren Umfang einer metallischen Einsteckendform (2) eines Metallrohrs (M), umfassend:
eine metallische Einsteckendform (2) eines Metallrohrs (M) und
ein Dichtungselement (S, 13), das am äußeren Umfang der Einsteckendform (2) angebracht ist,
**dadurch gekennzeichnet, dass** die Rohrverbindungskonstruktion ferner umfasst:
einen gesonderten Kranz (5, 15), der am äußeren Umfang des spitzen Endes der Einsteckendform angebracht ist, wobei der Kranz (5, 15) einen konisch zulaufenden Abschnitt (5a) mit einem konisch zulaufenden äußeren Umfang besitzt und als ein Halteelement für das Dichtungselement (S, 13) wirkt.

2. Rohrverbindungskonstruktion nach Anspruch 1, bei der der gesonderte Kranz (5, 15) aus einem Kunstharz gebildet ist.

3. Rohrverbindungskonstruktion nach einem der vorhergehenden Ansprüche, bei der am äußeren Umfang der Einsteckendform (2) in der Nähe des Dichtungselements (S, 13) an einer Position gegenüber dem Kranz (5, 15) ein Ring (11) angebracht ist.

4. Rohrverbindungskonstruktion nach Anspruch 3, bei der:
auf der Einsteckendform (2) ein Wulst (2b) ausgebildet ist; der Ring (11) in der Nähe des Dichtungselements (S, 13) zwischen dem Wulst (2b) und dem Dichtungselement (S, 13) angebracht ist; und
das Dichtungselement (S, 13) zwischen dem Kranz (5, 15) und dem Ring (11) angeordnet ist und gehalten wird.

5. Rohrverbindungskonstruktion nach einem der vorhergehenden Ansprüche, bei der:
auf der Einsteckendform (2) ein Wulst (2b) ausgebildet ist; und
das Dichtungselement (S, 13) in der Nähe des Wulstes (2b) angeordnet ist.

6. Rohrverbindungskonstruktion nach einem der vorhergehenden Ansprüche, bei dem:
der Kranz (5) eine Innenschulter (5b) besitzt, die an einem spitzen Ende der Einsteckendform (2) anliegt.

7. Rohrverbindungskonstruktion nach einem der vorhergehenden Ansprüche, bei der:
das spitze Ende der Einsteckendform (2) einen konisch zulaufenden Endabschnitt (2c) besitzt;
das Dichtungselement (S, 13) über dem konisch zulaufenden Endabschnitt (2c) der Einsteckendform (2) angebracht ist; und
der Kranz (5, 15) einen äußeren Umfang des konisch zulaufenden Endabschnitts des Dichtungselements (S) abdeckt.

8. Rohrverbindungskonstruktion nach einem der vorhergehenden Ansprüche, bei der:
das Dichtungselement (S, 13) ein Ende (13a) in Form eines 0-Rings, einen konisch zulaufenden Zwischenabschnitt (13b) und einen spitzen Endabschnitt (13c) umfasst.

9. Rohrverbindungskonstruktion nach einem der vorhergehenden Ansprüche, bei der:
der spitze Endabschnitt (13c) des Dichtungselements (S, 13) über den konisch zulaufenden Endabschnitt (2c) der Einsteckendform (2) hinaus vorsteht.

10. Rohrverbindungskonstruktion nach einem der vorhergehenden Ansprüche, bei der:
auf der Einsteckendform (2) ein Wulst (2b) ausgebildet ist; in der Nähe des Dichtungselements (S, 13) zwischen dem Wulst (2b) und dem Dichtungselement (S, 13) ein Ring (11) angebracht ist; und
das Dichtungselement (S, 13) zwischen dem Kranz (5, 15) und dem Ring (11) angeordnet ist und gehalten wird.

11. Rohrverbindungskonstruktion nach einem der vorhergehenden Ansprüche, bei der:
auf der Einsteckendform (2) ein Wulst (2b) ausgebildet ist; und
das Dichtungselement (S, 13) in der Nähe des Wulstes (2b) angeordnet ist.

12. Rohrverbindungskonstruktion nach einem der vorhergehenden Ansprüche, bei der:
die Einsteckendform (2) an einem Rohr (M) ausgebildet ist, das in das Polymerrohr (B) einschiebbar ist.

13. Rohrverbindungskonstruktion nach einem der vorhergehenden Ansprüche, die ferner umfasst:
das Metallrohr (M), das die Einsteckendform (2) besitzt, die an einem spitzen Ende des Metallrohrs ausgebildet ist, und einen gegenüberliegenden Buchsenabschnitt (3), wobei die Einsteckendform (2) in das Polymerrohr (P) einschiebbar ist und der Buchsenabschnitt (3) das Metallrohr (M) aufnimmt.

14. Rohrverbindungskonstruktion nach einem der vorhergehenden Ansprüche, bei der:
auf der Einsteckendform (2) des Metallrohrs (M) ein Wulst (2b) ausgebildet ist;
auf der Einsteckendform (2) in der Nähe des Dichtungselements (S, 13) zwischen dem Wulst (2b) und dem Dichtungselement (S, 13) ein Ring (11) angebracht ist; und
das Dichtungselement (S, 13) zwischen dem Kranz (5, 15) und dem Ring (11) angeordnet ist und gehalten wird.

15. Rohrverbindungskonstruktion nach einem der vorhergehenden Ansprüche, bei der:
auf der Einsteckendform (2) ein Wulst (2b) ausgebildet ist; und das Dichtungselement (S, 13) in der Nähe des Wulstes (2b) angeordnet ist.

## Revendications

1. Système de raccord de conduites pour emboîter un tube en polymère (P) sur la périphérie extérieure d'une forme d'extrémité mâle métallique (2) d'un tube métallique (M), comprenant :
une forme d'extrémité mâle métallique (2) d'un tube métallique (M), et
un élément d'étanchement (S, 13) monté sur la périphérie extérieure de la forme d'extrémité mâle (2),
**caractérisé en ce que** le système de raccord de conduites comprend en outre :
un collier séparé (5, 15) monté sur la périphérie extérieure de l'embout de la forme d'extrémité mâle, le collier (5, 15) ayant une partie effilée (5a) avec une périphérie extérieure effilée, ledit collier (5, 15) faisant office d'élément de maintien pour l'élément d'étanchement (S, 13).

2. Système de raccord de conduites selon la revendication 1, dans lequel le collier séparé (5, 15) est formé en une résine synthétique.

3. Système de raccord de conduites selon l'une des revendications précédentes, dans lequel une bague (11) est montée à la périphérie extérieure de la forme d'extrémité mâle (2) en position adjacente à l'élément d'étanchement (S, 13) à une position opposée au collier (5, 15).

4. Système de raccord de conduites selon la revendication 3, dans lequel :
un bourrelet (2b) est formé sur la forme d'extrémité mâle (2) ;
la bague (11) est montée adjacente à l'élément d'étanchement (S, 13) entre le bourrelet (2b) et l'élément d'étanchement (S, 13) ; et
l'élément d'étanchement (S, 13) est positionné et maintenu entre le collier (5, 15) et la bague (11).

5. Système de raccord de conduites selon l'une des revendications précédentes, dans lequel :
un bourrelet (2b) est formé sur la forme d'extrémité mâle (2) ; et
l'élément étanchement (S, 13) est positionné adjacent au bourrelet (2b).

6. Système de raccord de conduites selon l'une des revendications précédentes, dans lequel :
le collier (5) a un épaulement interne (5b) en butée contre un embout de la forme d'extrémité mâle (2).

7. Système de raccord de conduites selon l'une des revendications précédentes, dans lequel :
l'embout de la forme d'extrémité mâle (2) a une portion terminale effilée (2c) ;
l'élément d'étanchement (S, 13) est monté par-dessus la portion terminale effilée (2c) de la forme d'extrémité mâle (2) ; et
le collier (5, 15) couvre une périphérie extérieure de la portion terminale effilée de l'élément d'étanchement (S).

8. Système de raccord de conduites selon l'une des revendications précédentes, dans lequel :
l'élément d'étanchement (S, 13) a une extrémité (13a) en forme de bague torique, une partie intermédiaire effilée (13b), et une partie formant embout (13c).

9. Système de raccord de conduites selon l'une des revendications précédentes, dans lequel :
la partie formant embout (13c) de l'élément d'étanchement (S, 13) se projette au-delà de la portion terminale effilée (2c) de la forme d'extrémité mâle (2).

10. Système de raccord de conduites selon l'une des revendications précédentes, dans lequel :
un bourrelet (2b) est formé sur la forme d'extrémité mâle (2) ;
une bague (11) est montée adjacente à un l'élément d'étanchement (S, 13) entre le bourrelet (2b) et l'élément d'étanchement (S, 13) ; et
l'élément d'étanchement (S, 13) est positionné et maintenu entre le collier (5, 15) et la bague (11).

11. Système de raccord de conduites selon l'une des revendications précédentes, dans lequel :
un bourrelet (2b) est formé sur la forme d'extrémité mâle (2) ; et
l'élément d'étanchement (S, 13) est positionné adjacent au bourrelet (2b).

12. Système de raccord de conduites selon l'une des revendications précédentes, dans lequel :
la forme d'extrémité mâle (2) est formée sur un tube (M) susceptible d'être introduit dans le tube en polymère (P).

13. Système de raccord de conduites selon l'une des 'revendications précédentes, comprenant en outre :
ledit tube métallique (M) comprend la forme d'extrémité mâle (2) formée au niveau d'un embout du tube métallique, et une partie femelle opposée (3), la forme d'extrémité mâle (2) étant susceptible d'être introduite dans le tube en polymère (P), et la partie femelle (3) recevant le tube métallique (M).

14. Système de raccord de conduites selon l'une des revendications précédentes, dans lequel :
un bourrelet (2b) est formé sur la forme d'extrémité mâle (2) du tube métallique (M) ;
une bague (11) est montée sur la forme d'extrémité mâle (2) adjacente à l'élément étanchement (S, 13) entre le bourrelet (2b) et l'élément étanchement (S, 13) ; et
l'élément d'étanchement (S, 13) est positionné et maintenu entre le collier (5, 15) et la bague (11).

15. Système de raccord de conduites selon l'une des revendications précédentes, dans lequel :
un bourrelet (2b) est formé sur la forme d'extrémité mâle (2) ; et
l'élément d'étanchement (S, 13) est positionné adjacent au bourrelet (2b).
